# EUROPÄISCHE PATENTSCHRIFT

(11) **EP 2 523 877 B1**
(45) Veröffentlichungstag und Bekanntmachung des Hinweises auf die Patenterteilung: **05.03.2014**
(21) Anmeldenummer: 11700324.4
(22) Anmeldetag: 03.01.2011
(51) Int. Cl.: B65G 1/04

(54) **REGALLAGERSYSTEM**
SHELF STORAGE SYSTEM
SYSTÈME D'ENTREPOSAGE À RAYONNAGES

(30) Priorität: 14.01.2010 AT 402010
(43) Veröffentlichungstag der Anmeldung: 21.11.2012
(73) Patentinhaber: Knapp AG, 8075 Hart bei Graz (AT)
(72) Erfinder: TSCHURWALD, Anton, A-8010 Graz (AT); KOHOLKA, Roland, A-8502 Lannach (AT)
(74) Vertreter: Margotti, Herwig Franz
(86) Internationale Anmeldenummer: PCT/EP2011/050034
(87) Internationale Veröffentlichungsnummer: WO 2011/086009

(56) Entgegenhaltungen:
- WO-A1-2010/026633
- DE-A1- 1 531 898
- DE-A1- 10 234 150
- JP-A- 2004 123 240

## Beschreibung

Die Erfindung betrifft ein Regallagersystem gemäss dem Oberbegriff des Anspruchs 1.

Ein Regallagersystem mit den Merkmalen des Oberbegriffs des Anspruchs 1 ist aus der JP 2004 123 240 A bekannt. Das dokument WO 2010/026633 A1 fällt unter Art. 54(3) EPÜ.

Solche Regallagersysteme werden auch als "Shuttlesysteme" bezeichnet, abgeleitet von der Bezeichnung "Shuttles" für die Ebenenbediengeräte. Shuttlesysteme haben in vielen Lagistiksystemen und Kommissioniersystemen Verbreitung gefunden und sind in unterschiedlicher Ausführung bekannt, siehe z.B. DE 10234150 A1. Eine Gemeinsamkeit verbindet alle bekannten Shuttlesysteme: Die horizontale und die vertikale Bewegung der Produkte beim Einlagern und Auslagern findet getrennt statt.

Es sind auch Regallagersysteme bekannt, bei denen das Ebenenbediengerät auf eine Fördertechnik-Ebene gehoben wird, um dort Produkte aufzunehmen oder abzugeben. Bei solchen Systemen kann ein Ebenenbediengerät in eine beliebige Regalebene eingesetzt werden. Diese Systeme werden hier nicht näher betrachtet, da ihre Einlager/Auslager-Leistung relativ gering ist.

Bei den Hochleistungssystemen sind die Ebenenbediengeräte den Regalebenen fix zugeordnet. Die Produkte werden mit Hilfe eines oder mehrerer Lifte aus einer Regalebene in eine Fördertechnik-Ebene gebracht, die in einer Vorzone definiert ist, um von dort wegbefördert zu werden bzw. werden in umgekehrter Richtung zu der Fördertechnik-Ebene gebracht, um dort auf den Lift übergeben zu werden, die die Produkte dann in die für die Lagerung vorgesehene Regalebene bringen. Da üblicherweise die Summe der Förderkapazitäten aller Ebenenbediengeräte die Leistungsfähigkeit des Liftes übersteigt, stellt der Durchsatz an Produkten durch den Lift jenen Teil des Systems dar, der die Gesarntleistung beschränkt.

Es ist jeweils ein Lift für eine bestimmte Transportrichtung der Produkte (Einlagern oder Auslagern) vorgesehen. Entsprechend ist nur eine unidirektionale Anbindung des jeweiligen Liftes an die Fördertechnik zwischen Lift und Vorzone vorgesehen. Diese einfache und kostengünstige Art der Liftanbindung garantiert zwar eine einfache Steuerung, beschränkt aber die Durchsatzleistung des Gesamtsystems und schafft Probleme bei der Verfügbarkeit. Wenn nämlich ein Lift nur für Einlagerungen vorgesehen ist und ein zweiter Lift nur für Auslagerungen, dann führt ein Fehler an einem der beiden Lifte zum Ausfall des Gesamtsystems, sofern, wie allgemein üblich, das System darauf basiert, das sowohl Einlagerungen als auch Auslagerungen zur gleichen Zeit durchzuführen sind. Bei dieser Anbindung der Lifte an eine Fördertechnik stellt somit jeder der beiden Lifte einen "Single Point of Failure" dar.

Es ist daher eine Aufgabe der vorliegenden Erfindung, ein Regallagersystem bereitzustellen, mit denen ein hoher Durchsatz an Produkten erzielt wird und "Single Points of Failure" vermieden werden.

Diese Aufgabe wird durch die Weiterbildung des eingangs beschriebenen Regallagersystems gemäß den Merkmalen des Anspruchs 1 gelöst. Vorteilhafte Ausgestaltungen der Erfindung sind in den Unteransprüchen dargelegt.

Gemäß einem mit JP 2004-123240 A gemeinsamen Aspekt der Erfindung sind die Lifte jeweils sowohl an eine zuführende als auch eine wegführende Fördertechnik angeschlossen und jeweils sowohl zum Übernehmen von Produkten von der Fördertechnik und Zuführen dieser Produkte zu den Regalebenen als auch zum Wegführen von Produkten von den Regalebenen und Übergeben dieser Produkte auf die Fördertechnik ausgebildet. Dieses bidirektionale Anbinden der Lifte an die Fördertechnik, wodurch alle Lifte sowohl Produkte aufnehmen als auch abgeben können, hat den großen Vorteil, dass alle Lifte gleichwertig betreibbar sind. Dadurch kann jeder Lift im Fall der Störung eines anderen Lifts diesen gestörten Lift ersetzen. Dadurch wird ein "Single Point of Failure" vermieden.

Das erfindungsgemäße Regallagersystem weist eine wesentlich höherer Förderleistung auf als bekannte Regallager. Da nämlich bei bekannten Regallagern ein Lift nur für Einlagerungen vorgesehen ist und ein zweiter Lift nur für Auslagerungen, dann begrenzt die Kapazität des jeweiligen Lifts die maximale Anzahl der Operationen. Wenn zum Beispiel in einer Periode nur Produkte eingelagert werden, dann wird dazu nur ein Lift verwendet. d.h. die Kapazität des zweiten Lifts, der nur für Auslagerungen vorgesehen ist, kann nicht genutzt werden. Man vergeudet somit die halbe Kapazität. Gemäß der Erfindung mit bidirektionaler Anbindung aller Lifte kann jedoch die gesamte vorhandene Liftkapazität je nach benötigter Operation flexibel aufgeteilt werden. Im Fall des Einlagerns von Produkten können alle Lifte dazu verwendet werden, um Produkte einzulagern, das Auslagern von Produkten kann ebenfalls mit allen Liften gleichzeitig erfolgen. Es kann beim erfindungsgemäßen Regallagersystem jede beliebige Verteilung der Einlager- und Auslagervorgänge zwischen den Liften steuerungstechnisch realisiert werden. Dadurch erhöht sich der mögliche Durchsatz gegenüber den herkömmlichen Regallagern immer dann, wenn der benötigte Durchsatz für eine Richtung (Einlagern bzw. Auslagern) die Kapazität eines einzelnen Liftes übersteigt und die entgegengesetzte Richtung nicht die volle Kapazität eines Liftes benötigt.

Es sei erwähnt, dass der Begriff "Produkt" wie hierin verwendet, sowohl eine Ware an sich, als auch mehrere einzelne oder zu einer Einheit verpackte Güter umfasst. Weiters kann der Transport der Produkte sowohl auf solche Weise erfolgen, dass die Produkte direkt gefördert und manipuliert werden, als auch auf eine solche Weise, dass die Produkte in einem Behälter, wie einer Tasse, einer Kiste, einem Karton, etc. aufgenommen sind und im Behälter gefordert und ein- und ausgelagert werden.

Ein erfindungsgemäßes Regallagersystem mit nur wenigen Komponenten erzielt man, wenn die an die Lifte angeschlossene Fördertechnik Förderbahnen mit umkehrbaren Förderrichtungen umfasst.

Andererseits kann ein einfacher mechanischer und elektrischer Aufbau eines erfindungsgemäßen Regallagersystems erreicht werden, wenn die an die Lifte angeschlossene Fördertechnik Förderbahnen mit einer Förderrichtung zu den Liften hin und Förderbahnen mit einer Förderrichtung von den Liften weg umfasst. Gemäß der Erfindung sind pro Lift zwei zum Lift hin fördernde förderbahnen und eine vom Lift weg fördernde Förderbahn vorgesehen. Man erzielt damit eine gleichmäßigere Auslastung des Systems, da das Abziehen von Produkten normalerweise weniger zeitaufwändig ist als das Zuführen, weil nämlich im Regallagersystem eine Vielzahl von Ebenenbediengeräten vorgesehen ist, die zwischen dem Anfahren der jeweiligen Ebene mit den Liften viel Zeit haben, um auszulagernde Produkte aus den Lagerplätzen zu holen und in den Zwischenpuffer zu übergeben.

Eine Erhöhung des Durchsatzes im erfindungsgemäßen Regallagersystem erzielt man, indem zumindest einer der Lifte, vorzugsweise jedoch alle Lifte, mit zumindest zwei Liftplattformen zum Tragen von Produkten ausgestattet ist. Die Lifte können somit einerseits gleichzeitig mit mehr Produkten beladen werden. Andererseits ist es steuerungstechnisch auch möglich, eine der Liftplattformen einzulagernden Produkten zu widmen und die zweite Liftplattform auszulagernden Produkten zu widmen. Steuerungstechnisch ist jede Variante der Verteilung von einzulagernden und auszulagernden Produkten auf die Liftplattformen realisierbar, wodurch ein hoher Durchsatz an Produkten erzielbar ist.

Zu einer weiteren Erhöhung des Durchsatzes an Produkten gelangt man, indem die Fördertechnik so angeordnet ist, dass an zumindest einer Übergabeposition des Lifts zumindest zwei Liftplattformen mit Förderbahnen verbunden sind. Man kann an dieser Übergabeposition somit die Liftplattformen gleichzeitig beladen und/oder entladen. Geringen Platzbedarf für den Lift erreicht man, indem die Liftplattformen übereinander angeordnet sind. Erfindungsgemäß entspricht der vertikale Abstand zwischen den Liftplattformen dem vertikalen Abstand zwischen den Regalebenen, da man in diesem Fall gleichzeitig in zwei benachbarten Regalebenen Ein- und/oder Auslagervorgänge ausführen kann. Auch die Förderbahnen zu und/oder von den Liftplattformen sind übereinander angeordnet. Erfindungsgemäß entspricht dabei der vertikale Abstand zwischen zumindest zwei Förderbahnen dem vertikalen Abstand der Liftplattformen, so dass die Liftplattformen gleichzeitig beladen und/oder entladen werden können.

Bei dem erfindungsgemäßen Regallagersystem sind pro Lift zwei zum Lift hin fördernde Förderbahnen und eine vom Lift weg fördernde Förderbahn vorgesehen, wobei die vom Lift weg fördernde Förderbahn zwischen den zum Lift hin fördernden Förderbahnen angeordnet ist. Man kann dadurch den Lift in alternierende Übergabepositionen stellen, in denen jeweils ein Produkt an die vom Lift weg fördernden Förderbahn übergeben wird und ein Produkt aus einer der beiden zuführenden Förderbahnen auf den Lift übergeben wird.

In einer weiteren Ausführungsform der Erfindung ist die Fördertechnik in mehreren von den Liften anfahrbaren Fördertechnikebenen angeordnet. Jede der Fördertechnikebenen kann mit einer Vorzonenebene kombiniert werden, wodurch z.B. eine Kommissionierung in mehreren Vorzonen erfolgen kann.

Im Folgenden werden Ausführungsformen der Erfindung in nicht einschränkender Weise unter Bezugnahme auf die Zeichnungen näher erläutert.
Die Figuren 1A, 1B und 1C zeigen eine erste Ausführungsform eines erfindungsgemäßen Regallagersystems in der Perspektive, in Draufsicht und in Seitenansicht.
Die Figuren 2A, 2B und 2C zeigen eine zweite Ausführungsform eines erfindungsgemäßen Regallagersystems in der Perspektive, in Seitenansicht und in Draufsicht.
Figur 3 zeigt eine dritte Ausführungsform eines erfindungsgemäßen Regallagersystems in der Perspektive.
Die Figuren 4A, 4B und 4C zeigen eine vierte Ausführungsform eines erfindungsgemäßen Regallagersystems in der Perspektive, in Seitenansicht und in Draufsicht.
Figur 5 zeigt eine Variante der vierten Ausführungsform eines erfindungsgemäßen Regallagersystems in Seitenansicht.

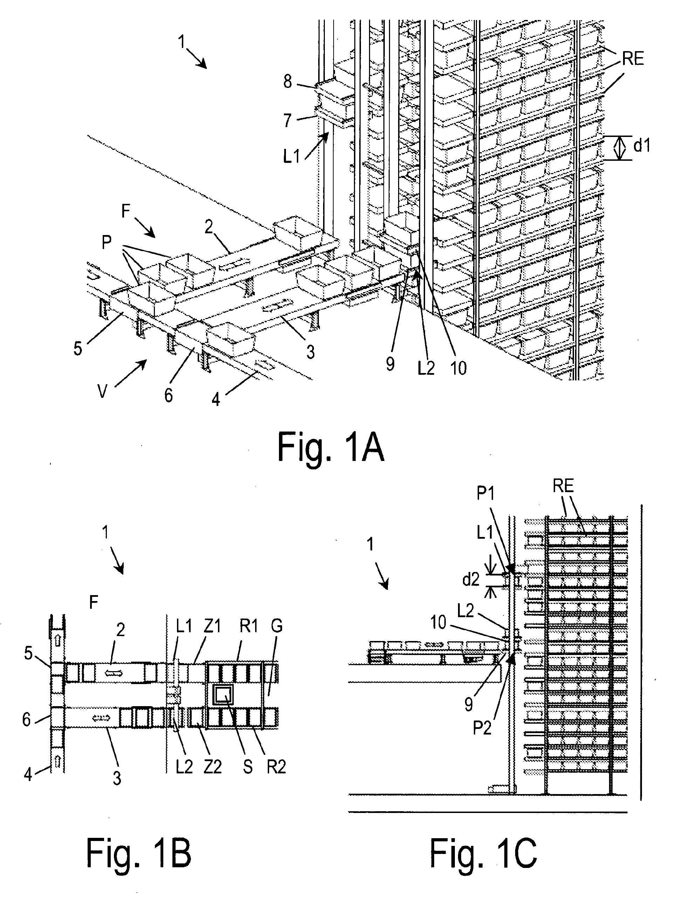

In den Figuren 1A, 1B und 1C ist eine erste Ausführungsform eines erfindungsgemäßen Regallagersystems 1 dargestellt. Das Regallagersystem 1 umfasst Regale R1, R2, zwischen denen eine Fahrgasse G ausgebildet ist. Jedes der Regale R1, R2 weist eine Vielzahl von übereinander angeordneten Regalebenen RE auf. In jeder Regalebene RE befindet sich zwischen den Regalen eine Fahrgasse G, wobei in jeder Fahrgasse G ein Ebenenbediengerät S vorgesehen ist, das in der Fahrgasse hin- und herfahren kann, um Lagerplätze in den Regalen R1, R2 anzufahren, entweder, um Produkte P aus den Lagerplätzen zu holen und zu einem Zwischenpuffer Z1, Z2 zu bringen, oder um von einem der Zwischenpuffer Z1, Z2 geholte Produkte P in die Lagerplätze einzulagern. Die Lagerplätze können so dimensioniert sein, dass eine mehrfach tiefe Lagerung möglich ist, indem mehrere Produkte hintereinander in einem Lagerplatz gelagert werden. In einer in der Zeichnung nicht dargestellten Variante der Erfindung bedient ein Ebenenbediengerät mehrere (vorzugsweise zwei) Regalebenen RE, so dass nicht in jeder Regalebene eine Fahrgasse mit Ebenenbediengerät angeordnet sein muss. Auch wenn ein Ebenenbediengerät mehrere Regalebenen bedient, kann dennoch pro Regalebene RE zumindest ein Zwischenpuffer Z1, Z2 angeordnet sein. Wenn Ebenenbediengeräte mehrere Regalebenen bedienen, ist die Anordnung so, dass die Ebenenbediengeräte einander nicht überschneidend Regalebenen bedienen.

In den Zeichnungen sind die Produkte P durch Behälter dargestellt, mit denen symbolisiert wird, dass der Begriff "Produkt" wie hierin verwendet, sowohl eine oder mehrere Waren an sich, in Einzelteilen oder zu einer Einheit verpackt, als auch Güter, die in einem Behälter, wie einer Tasse, einer Kiste, etc. transportiert und gelagert werden, umfasst.

Im Regallagersystem 1 sind zwei Lifte L1, L2 vorgesehen, mit denen Produkte P zu den Regalebenen RE gebracht und dort in die Zwischenpuffer Z1, Z2 übergeben werden, und in den Zwischenpuffern Z1, Z2 zwischengelagerte Produkte P von den Regalebenen RE abgeholt werden. Eine Fördertechnik F dient zum Zuführen und Wegführen von Produkten P zu bzw. von den Liften L1, L2. Die Fördertechnik F nimmt Produkte P aus einer Vorzone V auf bzw. gibt sie an die Vorzone V ab.

Gemäß der Erfindung sind die Lifte L1, L2 jeweils sowohl an eine zuführende als auch eine wegführende Fördertechnik angeschlossen, die in diesem Ausführungsbeispiel als bidirektionale Förderbahnen 2, 3, d.h. Förderbahnen mit umkehrbarer Förderrichtung, ausgebildet sind. Somit können beide Lifte L1, L2 sowohl Produkte P von den Förderbahnen 2, 3 übernehmen als auch Produkte P auf die Förderbahnen 2, 3 abgeben, die dann zur Vorzone V weggeführt werden. Die Vorzone V umfasst in diesem Ausführungsbeispiel ein undirektionales Förderband 4, das zwei Übergabestationen 5, 6, aufweist, an denen Produkte P auf die Förderbahnen 2, 3 übergebbar bzw. aufnehmbar sind.

Jeder der Lifte L1, L2 ist mit zwei Liftplattformen 7, 8 bzw. 9, 10 ausgestattet, die jeweils übereinander angeordnet sind. Der vertikale Abstand d2 zwischen den Liftplattformen 7, 8 bzw. 9, 10 entspricht dem vertikalen Abstand d1 zwischen den Regalebenen RE. Dadurch können, wenn sich ein Lift, hier z.B. der Lift L1, an einer Regalübergabeposition P1 befindet, an die Zwischenpuffer von zwei übereinander liegenden Regalebenen RE gleichzeitig Produkte P übergeben werden, oder aus den Zwischenpuffern von zwei übereinander liegenden Regalebenen RE Produkte P gleichzeitig auf die Liftplattformen geholt werden, oder ein Produkt von einer Liftplattform 7 an den Zwischenpuffer einer Regalebene übergeben und ein anderes Produkt von einem Zwischenpuffer der benachbarten Regalebene auf die Liftplattform 8 geholt werden.

In Fig. 1C sieht man, dass sich der Lift L2 in einer Übergabeposition P2 befindet, in der die untere Liftplattform 9 auf dem Niveau der Förderbahn 3 liegt, wodurch ein Produkt von der Förderbahn 3 auf die Liftplattform 9 übergeben bzw. auch umgekehrt ein Produkt von der Liftplattform 9 auf die Förderbahn 3 übergeben werden kann. Um die obere Liftplattform 10 des Lifts L2 zu beladen oder entladen, muss der Lift L2 verfahren werden, dass die Liftplattform 10 in die Übergabeposition P2 gelangt.

Durch das bidirektionale Anschließen der Lifte L1, L2 an die beiden bidirektionalen Förderbahnen 2, 3, wodurch jeder der beiden Lifte L1, L2 sowohl zum Übernehmen von Produkten von der Fördertechnik F und zum nachfolgenden Zuführen dieser Produkte zu den Regalebenen RE als auch zum Holen von Produkten P von den Regalebenen RE und Übergeben dieser Produkte auf die Fördertechnik F ausgebildet ist, sind beide Lifte L1, L2 gleichwertig betreibbar. Dadurch kann jeder Lift L1, L2 im Fall der Störung des anderen Lifts L2, L1 diesen gestörten Lift ersetzen.

Das erfindungsgemäße Regallagersystem 1 kann auch so betrieben werden, dass in einem ersten Zeitabschnitt mit beiden Liften L1, L2 nur Produkte in die Regale R1, R2 eingelagert werden, und in einem zweiten Zeitabschnitt mit beiden Liften L1, L2 nur Produkte von den Regalebenen RE geholt und an die Fördertechnik F übergeben werden. Allgemein kann mit dem erfindungsgemäßen Regallagersystem 1 die gesamte vorhandene Liftkapazität je nach benötigten Einlager- und/oder Auslagervorgängen flexibel aufgeteilt werden, wobei jede beliebige Verteilung der Einlager- und Auslagervorgänge zwischen den Liften L1, L2 steuerungstechnisch realisiert werden kann. Dadurch erhöht sich der mögliche Durchsatz an Produkten gegenüber den herkömmlichen Regallagern immer dann, wenn der benötigte Durchsatz für eine Richtung (Einlagern bzw. Auslagern) die Kapazität eines einzelnen Liftes übersteigt und die entgegengesetzte Richtung nicht die volle Kapazität eines Liftes benötigt.

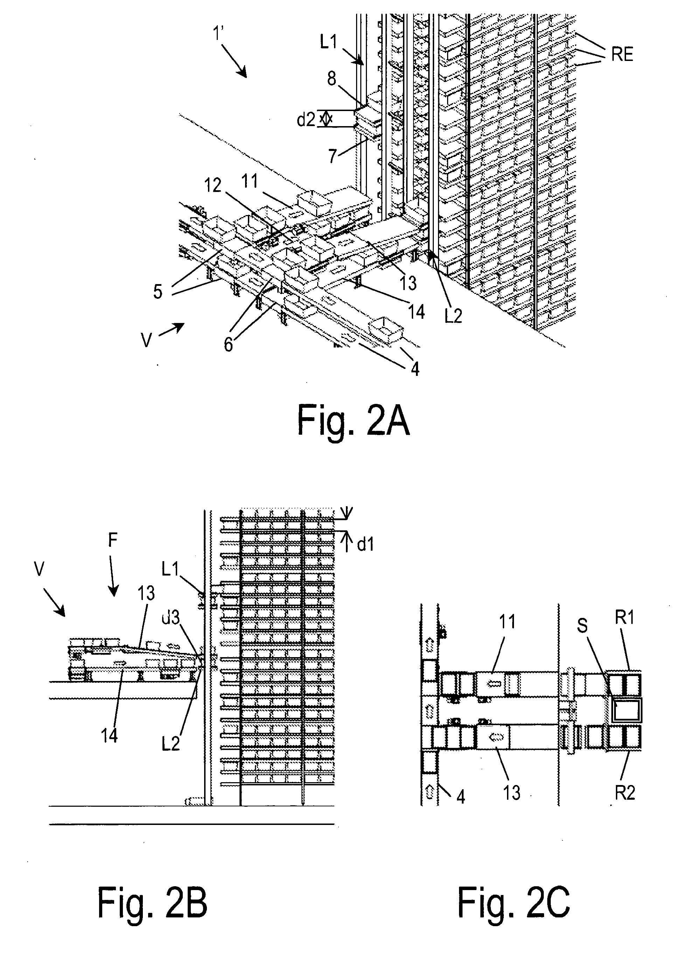

In den Figuren 2A, 2B und 2C ist eine zweite Ausführungsform eines erfindungsgemäßen Regallagersystems 1' dargestellt, die sich von der ersten Ausführungsform nur durch die Gestaltung der Fördertechnik F und der Vorzone V unterscheidet. In den Figuren 2A, 2B und 2C sind gleiche oder ähnliche Teile des Regallagersystems 1' mit den gleichen Bezugszeichen versehen wie bei der ersten Ausführungsform des Regallagersystems 1. Bezüglich einer Beschreibung dieser gleichen oder ähnlichen Teile wird auf die erste Ausführungsform verwiesen.

Beim Regallagersystem 1' ist die Fördertechnik F so realisiert, dass zu jedem Lift L1, L2 jeweils eine Förderbahn 12, 14 mit einer Förderrichtung zu den Liften L1, L2 hin und jeweils eine Förderbahn 11, 13 mit einer Förderrichtung von den Liften L1, L2 weg vorgesehen ist. Obwohl jede der Förderbahnen 11, 12, 13, 14 eine unidirektionale Förderbahn ist, ist die Fördertechnik F als Ganzes doch so ausgelegt, dass jeder Lift L1, L2 jeweils sowohl an eine zuführende als auch eine wegführende Fördertechnik angeschlossen ist. Daher ist jeder Lift L1, L2 sowohl zum Übernehmen von Produkten von der Fördertechnik F und Zuführen dieser übernommenen Produkte zu den Regalebenen RE als auch zum Wegführen von Produkten von den Regalebenen RE und Übergeben dieser Produkte auf die Fördertechnik F ausgebildet.

Jeweils eine Förderbahn 12, 14 mit einer Förderrichtung zu den Liften L1, L2 hin und jeweils eine Förderbahn 11, 13 mit einer Förderrichtung von den Liften L1, L2 weg sind übereinander angeordnet, und zwar in einem solchen vertikalen Abstand d3 voneinander, der dem vertikalen Abstand d2 der übereinanderliegenden Liftplattformen 7, 8 bzw. 9, 10 entspricht. Somit können beide Lifte L1, L2 Produkte P von den zuführenden Förderbahnen 12, 14 übernehmen und gleichzeitig Produkte P auf die abführenden Förderbahnen 11, 13 abgeben, die dann zur Vorzone V weggeführt werden. Die Vorzone V umfasst in diesem Ausführungsbeispiel zwei übereinander angeordnete undirektionale Förderbänder 4, die jeweils Übergabestationen 5, 6 aufweisen, an denen Produkte P auf die Förderbahnen 12, 14 übergebbar sind (am unteren Förderband 4) bzw. Produkte P von den Förderbahnen 11, 13 aufnehmbar sind (am oberen Förderband 4).

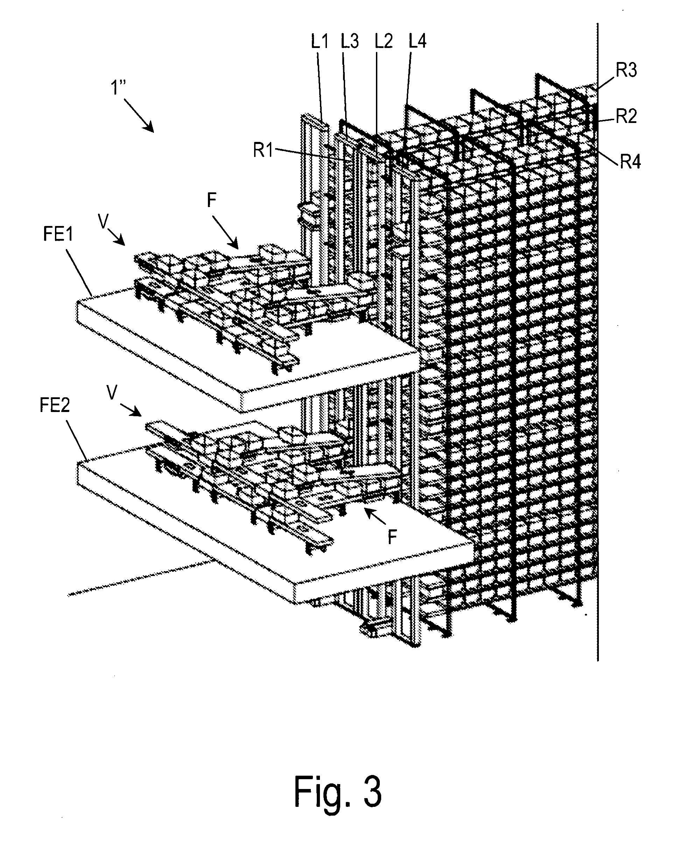

In Fig. 3 ist eine dritte Ausführungsform eines erfindungsgemäßen Regallagersystems 1" dargestellt, die sich von dem zweiten Regallagersystem 1' insofern unterscheidet, als dass die Anbindungen der Regale R1, R2, R3, R4, und Lifte L1, L2, L3, L4 an eine Vorzone auf zwei übereinanderliegende Fördertechnikebenen FE1, FE2 vorgesehen sind. Jeweils zwei der Lifte L1, L2 bzw. L3, L4 sind mittels bidirektionaler Fördertechnik F und Vorzonen V an eine der Fördertechnikebenen FE1, FE2 angeschlossen. In der ersten (oberen) Fördertechnikebene FE1 werden die Lifte L1, L2 bedient, in der zweiten (unteren) Fördertechnikebene FE2 die Lifte L3, L4. Es handelt sich bei diesem Regallagersystem 1" um ein Hochleistungssystem, das die Skalierbarkeit der vorliegenden Erfindung demonstriert. Da nicht alle Lifte an alle Fördertechnikebenen angeschlossen sind, sondern jeweils nur zwei Lifte pro Fördertechnikebene, spart man Fördertechnikkomponenten ein. Dennoch kann von jeder Fördertechnikebene FE1, FE2 auf jeden Lagerplatz in den Regalen R1, R2, R3, R4 zugegriffen werden.

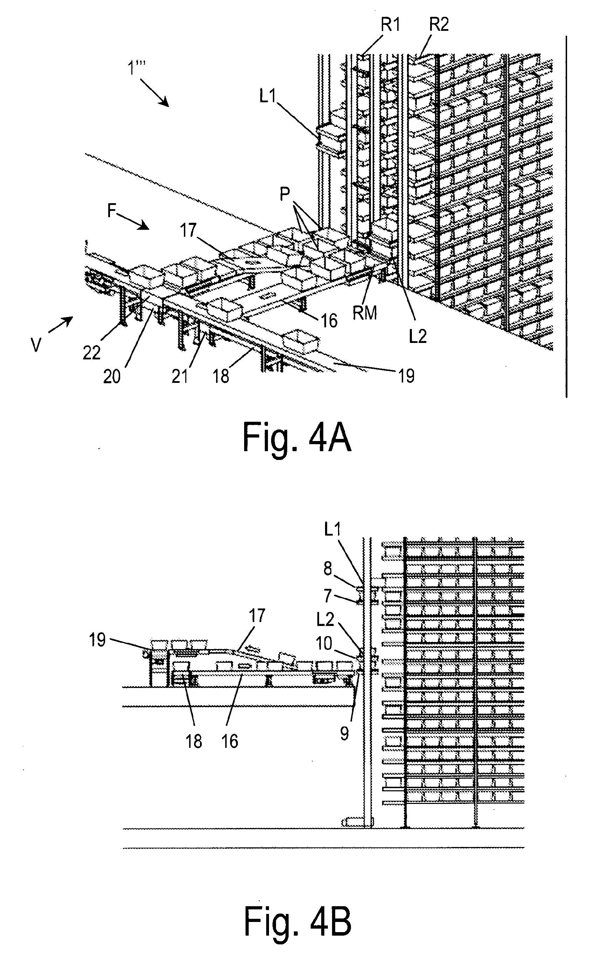

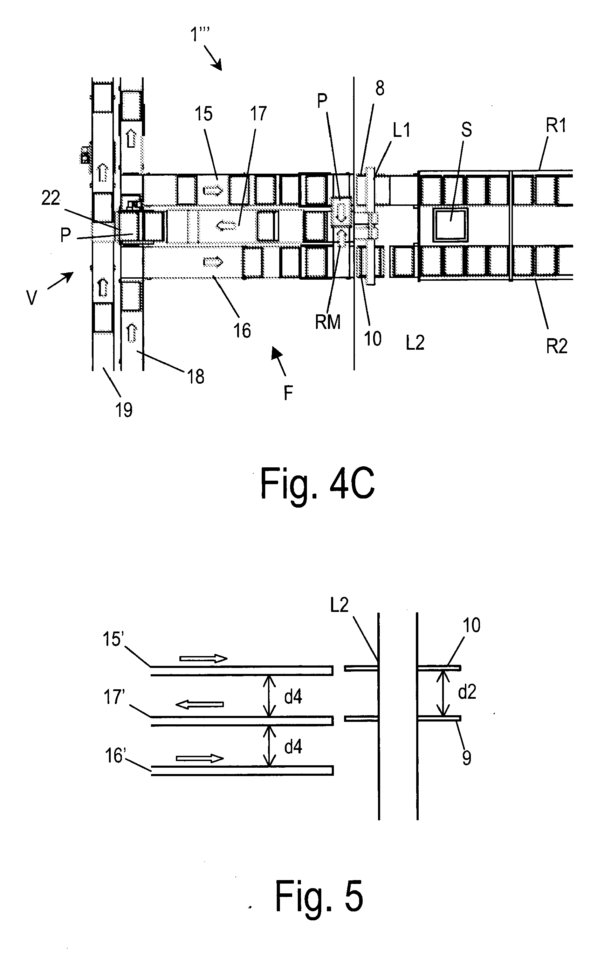

In den Figuren 4A, 4B und 4C ist eine vierte Ausführungsform eines eifindungsgemäßen Regallagersystems 1"' dargestellt, die sich von den vorhergehenden Ausführungsformen wiederum nur durch die Gestaltung der Fördertechnik F und der Vorzone V unterscheidet. In den Figuren 4A, 4B und 4C sind gleiche oder ähnliche Teile des Regallagersystems 1"' mit den gleichen Bezugszeichen versehen wie bei der ersten Ausführungsform des Regallagersystems 1. Bezüglich einer Beschreibung dieser gleichen oder ähnlichen Teile wird auf die erste Ausführungsform verwiesen.

Beim Regallagersystem 1"' umfasst die an die Lifte L1, L2 angeschlossene Fördertechnik F zwei Förderbahnen 15, 16 mit einer Förderrichtung zu den Liften L1, L2 hin sowie eine Förderbahn 17 mit einer Förderrichtung von den Liften L1, L2 weg. Diese von den Liften L1, L2 wegfördernde Förderbahn 17 ist zwischen den zu den Liften hinfördernden Förderbahnen 15, 16 und auch zwischen den Liften L1, L2 angeordnet. Rangiermittel RM zwischen Lift und Förderbahnen 15, 16, 17 dienen dazu, von einer auf der Höhe der Förderbahnen 15, 16 stehenden Liftplattform 7, 8, 9, 10 ein Produkt P zu übernehmen und in Querrichtung zu den Förderbahnen zur wegfördernden Förderbahn 17 zu bewegen und auf diese Förderbahn 17 zu übergeben.

Die Vorzone V umfasst beim Regallagersystem 1"' zwei nebeneinander und in unterschiedlichen Höhen angeordnete unidirektionale Förderbänder 18, 19. Das eine Förderband 18 weist eine Übergabestationen 22 auf, an der Produkte P von der wegfördernden Förderbahn 17 übennommen werden können. Das andere Förderband 19 weist zwei Übergabestationen 20, 21 auf, mithilfe derer Produkte auf die zuführenden Förderbahnen 15, 16 übergebbar sind.

In einer in Fig. 5 schematisch in Seitenansicht dargestellten Variante des Regallagersystems 1"' sind pro Lift L1, L2 zwei zum Lift (in der Zeichnung ist Lift L2 zu sehen) hin fördernde Förderbahnen 15', 16' und eine vom Lift weg fördernde Förderbahn 17' vorgesehen, wobei die vom Lift weg fördernde Förderbahn 17' zwischen den zum Lift hin fördernden Förderbahnen 15', 16' angeordnet ist. Der vertikale Abstand d4 zwischen den Förderbahnen 15', 17' bzw. 16', 17' entspricht dem vertikalen Abstand d2 der Liftplattformen 9, 10. Bei dieser Variante ist kein Rangiermittel erforderlich. Der jeweilige Lift (hier Lift L2) kann in zwei unterschiedlich hohe Übergabepositionen gestellt werden. In der ersten, höheren Übergabeposition befinden sich die Liftplattformen 9, 10 auf der Höhe der beiden höheren Förderbahnen 15', 17', wobei die obere Liftplattform 10 der zufördernden Förderbahn 15' gegenübersteht, und die untere Liftplattform 9 der wegfördernden Förderbahn 17' gegenübersteht. In dieser Stellung kann ein Produkt auf die obere Liftplattform 10 übergeben werden und gleichzeitig ein anderes Produkt von der unteren Liftplattform 9 auf die wegfördernde Förderbahn 17' übergeben werden. In der zweiten (hier nicht dargestellten), tieferen Übergabeposition steht die obere Liftplattform 10 der wegfördernden Förderbahn 17' gegenüber, und die untere Liftplattform 9 steht der zufördernden Förderbahn 16' gegenüber. In dieser Stellung kann ein Produkt auf die untere Liftplattform 9 übergeben werden und gleichzeitig ein anderes Produkt von der oberen Liftplattform 10 auf die wegfördernde Förderbahn 17' übergeben werden. Ein weiterer Vorteil dieser Ausführungsform ist, dass die Steuerung so erfolgen kann, dass nur die obere Liftplattform für Ein- und Auslagerungen die oberste Regalebene anfährt und nur die untere Liftplattform für Ein- und Auslagerungen die unterste Regalebene anfährt. So kann eine Reduzierung der Bauhöhe erreicht werden, da nicht sichergestellt werden muss, dass beide Liftplattformen alle Regalebenen erreichen.

Alle beschriebenen Ausführungsformen des erfindungsgemäßen Regallagersystems weisen eine bidirektionale Anbindung aller Lifte L1 - L4 an die Fördertechnik F auf. Dadurch sind alle Lifte in der Lage sowohl Behälter von der Fördertechnik aufzunehmen als auch an sie abzugeben, wodurch alle Lifte unabhängig voneinander sowohl zum Einlagern als auch zum Auslagern von Produkten betrieben werden können. Im einen Extremfall werden mit allen Liften gleichzeitig Produkte in die Regale eingelagert. Im anderen Extremfall werden mit allen Liften gleichzeitig Produkte aus den Regalen geholt und an die Fördertechnik übergeben. Auch jede Verteilung zwischen diesen Extremfällen kann steuerungstechnisch realisiert werden.

Ein weiterer Vorteil der doppelten Anbindung der Lifte ist, dass man zwei Liftplattformen pro Lift im Regalebenenabstand anordnen kann und auch die Fördertechnik in diesem Abstand aufbauen kann. Dadurch wird es möglich, dass die Fördertechnik pro Lift gleichzeitig ein Produkt an den Lift übergibt und ein anderes aus dem Lift entnimmt. Dasselbe ist auf benachbarten Regalebenen möglich. Dadurch ist eine deutliche Durchsatzsteigerung zu erreichen, da sich die Übergabezeiten für zu entnehmende und zu übergebende Produkte am Lift nicht addieren. Aus steuerungstechnischer Sicht ist es jedoch einfacher, obgleich nicht unbedingt notwendig, auf das Doppelspiel bei der Übergabe an das bzw. aus dem Regal zu verzichten und nur den Zeitvorteil der gleichzeitigen Be- und Entladung des Liftes an der Fördertechnik zu nutzen.

## Patentansprüche

1. Regallagersystem (1, 1', 1 ", 1"') mit Regalen (R1, R2, R3, R4) mit mehreren übereinander angeordneten Regalebenen (RE) mit Lagerplätzen für Produkte (P), und mit verfahrbaren Ebenenbediengeräten (S) zum Anfahren der Lagerplätze, mit zumindest zwei Liften (L1, L2, L3, L4), um Produkte (P) zu den Regalebenen (RE) zu bringen und von den Regalebenen (RE) abzuholen, mit einer Fördertechnik (F) zum Zuführen und Wegführen von Produkten zu den Liften, mit Zwischenpuffern (Z1, Z2) in den Regalebenen (RE), in welchen Zwischenpuffern von den Liften zugeführte Produkte bis zur Übergabe auf das Ebenenbediengerät zwischengespeichert werden und in denen von dem Ebenenbediengerät aus Lagerplätzen geholte Produkte bis zu ihrer Übergabe auf die Lifte zwischengespeichert werden, wobei die Lifte (L1, L2, L3, L4) jeweils sowohl an eine zuführende als auch eine wegführende Fördertechnik (F) angeschlossen sind und jeweils sowohl zum Übernehmen von Produkten (P) von der Fördertechnik (F) und Zuführen dieser Produkte zu den Regalebenen (RE) als auch zum Wegführen von Produkten von den Regalebenen und Übergeben dieser Produkte auf die Fördertechnik ausgebildet sind, **dadurch gekennzeichnet, dass** zumindest einer der Lifte (L1, L2, L3, L4) mit zumindest zwei Liftplattformen (7, 8, 9, 10) zum Tragen von Produkten ausgestattet ist, wobei die Liftplattformen (7, 8, 9, 10) übereinander angeordnet sind und die Förderbahnen (11, 12, 13, 14, 15', 16', 17') übereinander angeordnet sind, wobei der vertikale Abstand (d3, d4) zwischen zumindest zwei Förderbahnen dem vertikalen Abstand (d2) der Liftplattformen (7, 8, 9, 10) entspricht, wobei pro Lift (L1, L2) zwei zum Lift hin fördernde Förderbahnen (15, 16, 15', 16') und eine vom Lift weg fördernde Förderbahn (17, 17') vorgesehen sind, wobei die vom Lift weg fördernde Förderbahn (17, 17') zwischen den zum Lift hin fördernden Förderbahnen (15, 16, 15', 16') angeordnet ist.

2. Regallagersystem nach Anspruch 1, **dadurch gekennzeichnet, dass** die an die Lifte (Ll, L2) angeschlossene Fördertechnik Förderbahnen (2, 3) mit umkehrbaren Förderrichtungen umfasst.

3. Regallagersystem nach Anspruch 1 oder 2, **dadurch gekennzeichnet, dass** die an die Lifte (L1, L2, L3, L4) angeschlossene Fördertechnik Förderbahnen (12, 14, 15, 16, 15', 16') mit einer Förderrichtung zu den Liften hin und Förderbahnen (11, 13, 17, 17') mit einer Förderrichtung von den Liften (L1, L2, L3, L4) weg umfasst.

4. Regallagersystem nach Anspruch 1, **dadurch gekennzeichnet, dass** die Fördertechnik (F) so angeordnet ist, dass an zumindest einer Übergabeposition des Lifts zumindest zwei Liftplattformen (7, 8, 9, 10) mit Förderbahnen (11, 12, 13, 14, 15', 16', 17') verbunden sind.

5. Regallagersystem nach Anspruch 1 oder 4, **dadurch gekennzeichnet, dass** der vertikale Abstand (d2) zwischen den Liftplattformen dem vertikalen Abstand (d1) zwischen den Regalebenen (RE) entspricht.

6. Regallagersystem nach einem der vorhergehenden Ansprüche, **dadurch gekennzeichnet, dass** die Fördertechnik (F) in mehreren von den Liften anfahrbaren Fördertechnikebenen (FE1, FE2) angeordnet ist.

## Claims

1. A shelf storage system (1, 1', 1", 1"') comprising shelves (R1, R2, R3, R4) having several shelf levels (RE) arranged on top of each other with storage spaces for products (P), and comprising movable level operating devices (S) for moving to the storage spaces, comprising at least two lifts (L1, L2, L3, L4) for taking products (P) to the shelf levels (RE) and fetching them from the shelf levels (RE), comprising a conveyor (F) for supplying products to the lifts and removing them from there, comprising intermediate buffers (Z1, Z2) in the shelf levels (RE), in which intermediate buffers products supplied by the lifts are stored temporarily until they are transferred onto the level operating device and in which products taken from storage spaces by the level operating device are stored temporarily until they are transferred to the lifts, wherein the lifts (L1, L2, L3, L4) are, in each case, connected both to a supplying and to a removing conveyor (F) and are, in each case, designed both for receiving products (P) from the conveyor (F) and for supplying these products to the shelf levels (RE) as well as for removing products from the shelf levels and transferring these products onto the conveyor, **characterized in that** at least one of the lifts (L1, L2, L3, L4) is equipped with at least two lift platforms (7, 8, 9, 10) for carrying products, wherein the lift platforms (7, 8, 9, 10) are arranged on top of each other and the conveying tracks (11, 12, 13, 14, 15', 16', 17') are arranged on top of each other, wherein the vertical distance (d3, d4) between at least two conveying tracks corresponds to the vertical distance (d2) between the lift platforms (7, 8, 9, 10), wherein two conveying tracks (15, 16, 15', 16') conveying toward the lift and one conveying track (17, 17') conveying away from the lift are provided per lift (L1, L2), wherein the conveying track (17, 17') conveying away from the lift is arranged between the conveying tracks (15, 16, 15', 16') conveying toward the lift.

2. A shelf storage system according to claim 1, **characterized in that** the conveyor connected to the lifts (L1, L2) comprises conveying tracks (2, 3) with reversible conveying directions.

3. A shelf storage system according to claim 1 or 2, **characterized in that** the conveyor connected to the lifts (L1, L2, L3, L4) comprises conveying tracks (12, 14, 15, 16, 15', 16') with a conveying direction toward the lifts and conveying tracks (11, 13, 17, 17') with a conveying direction away from the lifts (L1, L2, L3, L4).

4. A shelf storage system according to claim 1, **characterized in that** the conveyor (F) is arranged such that, in at least one transfer position of the lift, at least two lift platforms (7, 8, 9, 10) are connected to conveying tracks (11, 12, 13, 14, 15', 16', 17').

5. A shelf storage system according to claim 1 or 4, **characterized in that** the vertical distance (d2) between the lift platforms corresponds to the vertical distance (d1) between the shelf levels (RE).

6. A shelf storage system according to any of the previous claims, **characterized in that** the conveyor (F) is arranged at several conveyor levels (FE1, FE2) the lifts can be moved to.

## Revendications

1. Système d'entreposage à rayonnages (1, 1', 1", 1"') comprenant des rayonnages (R1, R2, R3, R4) avec plusieurs plans de rayonnages (RE) agencés les uns au-dessus des autres et présentant des emplacements d'entreposage pour des produits (P), et comprenant des appareils de desserte de plans (S) déplaçables pour s'approcher des emplacements d'entreposage, comprenant au moins deux monte-charge (L1, L2, L3, L4), afin d'amener les produits (P) aux plans de rayonnages (RE) et de les enlever depuis les plans de rayonnages (RE), comprenant des moyens techniques de convoyage (F) pour amener des produits aux monte-charge et pour enlever des produits depuis les monte-charge, comprenant des tampons intermédiaires (Z1, Z2) dans les plans de rayonnages (RE), tampons dans lesquels des produits amenés aux monte-charge sont stockés de manière intermédiaire jusqu'à leur remise à l'appareil de desserte de plan et dans lesquels des produits enlevés des emplacements d'entreposage par l'appareil de desserte de plan sont stockés de manière intermédiaire jusqu'à leur remise aux monte-charge, dans lequel les monte-charge (L1, L2, L3, L4) sont raccordés chacun à la fois à des moyens techniques de convoyage d'approche et à des moyens techniques de convoyage d'éloignement (F) et sont réalisés respectivement à la fois pour reprendre des produits (P) depuis des moyens techniques de convoyage (F) et amener ces produits aux plans de rayonnages (RE) et pour éloigner des produits depuis les plans de rayonnages et remettre ces produits aux moyens techniques de convoyage, **caractérisé en ce qu'**au moins un des monte-charge (L1, L2, L3, L4) est équipé d'au moins deux plates-formes de monte-charge (7, 8, 9, 10) pour porter des produits, lesdites plates-formes (7, 8, 9, 10) sont agencées les unes au-dessus des autres et les voies de convoyage (11, 12, 13, 14, 15', 16', 17') sont agencées les unes au-dessus des autres, de sorte que la distance verticale (d3, d4) entre au moins deux voies de convoyage correspond à la distance verticale (d2) des plates-formes (7, 8, 9, 10), et dans lequel il est prévu pour chaque monte-charge (L1, L2) deux voies de convoyage (15, 16, 15', 16') qui convoient en direction du monte-charge et une voie de convoyage (17, 17') qui convoie en éloignement du monte-charge, et dans lequel la voie de convoyage (17, 17') qui convoie en éloignement du monte-charge est agencée entre les voies de convoyage (15, 16, 15', 16') qui convoient en direction du monte-charge.

2. Système d'entreposage à rayonnages selon la revendication 1, **caractérisé en ce que** les moyens techniques de convoyage raccordés aux monte-charge (L1, L2) comprennent des voies de convoyage (2, 3) avec des directions de convoyage inversibles.

3. Système d'entreposage à rayonnages selon la revendication 1 ou 2, **caractérisé en ce que** les moyens techniques de convoyage raccordés aux monte-charge (L1, L2, L3, L4) comprennent des voies de convoyage (12, 14, 15, 16, 15', 16') avec une direction de convoyage vers les monte-charge et des voies de convoyage (11, 13, 17, 17') avec une direction de convoyage en éloignement des monte-charge (L1, L2, L3, L4).

4. Système d'entreposage à rayonnages selon la revendication 1, **caractérisé en ce que** les moyens techniques de convoyage (F) sont agencés de telle façon qu'à au moins une position de remise du monte-charge au moins deux plates-formes de monte-charge (7, 8, 9, 10) sont raccordées avec des voies de convoyage (11, 12, 13, 14, 15', 16', 17').

5. Système d'entreposage à rayonnages selon la revendication 1 ou 4, **caractérisé en ce que** la distance verticale (d2) entre les plates-formes correspond à la distance verticale (d1) entre les plans de rayonnages (RE).

6. Système d'entreposage à rayonnages selon l'une des revendications précédentes, **caractérisé en ce que** les moyens techniques de convoyage (F) sont agencés dans plusieurs plans techniques de convoyage (FE1, FE2) auxquels les monte-charge peuvent s'approcher.
